# EUROPEAN PATENT APPLICATION

(11) **EP 4 721 589 A1**
(43) Date of publication of application: **08.04.2026**
(21) Application number: 23939443.0
(22) Date of filing: 15.08.2023
(51) Int. Cl.: A24D 3/02, A24D 3/08, A24D 3/16, B01D 53/04, B01J 20/20

(54) **MULTIFILTER DEVICE FOR HOFFMANN COMPOUNDS IN GASEOUS MEDIA**

(30) Priority: 31.05.2023 UY 40294
(71) Applicant: Compañia Industrial de Tabacos Monte Paz S.A., Montevideo (UY)
(72) Inventor: BENSE CANDELA, Tomas, Montevideo (UY); TAROCO SANTANA, Elsa, Montevideo (UY); RUFENER RAMA, Cristina Alejandra, Montevideo (UY)
(74) Representative: Herrero & Asociados, S.L.
(86) International application number: PCT/IB2023/058188
(87) International publication number: WO 2024/246596

(57) **Abstract**

A multi-adsorbent filter device capable of selectively and simultaneously reducing or removing the content of smoke toxic compounds or aerosol of tobacco products belonging to at least four groups of Hoffmann compounds in gaseous media, that is, carbonyls and volatile organic compounds, polyaromatic hydrocarbons and nitrosamines, consisting of a macroporous polymeric structure filter section and a cellulose acetate section, whereby the macroporous polymeric structure filter section is polyethylene of very high molecular weight acting as a support and binder of the adsorbent agents, whereby adsobents are specially selected and quantified.

## Description

The particle and vapor fractions in cigarette smoke include thousands of substances. Among these, there are groups or families of substances especially undesirable because of their toxic properties. Indiscriminate filtration to eliminate or reduce these would also eliminate non-toxic substances that provide the cigarette's characteristic flavor and aroma, thus affecting its commercial value: selective filtration aims at reducing or eliminating undesirable smoke products by improving their health profile while respecting their sensory properties. Undesirable health compounds or families are often referred to as *Hoffman compounds or families* and they are grouped by their chemical structures and functionalities.

The filter to be patented is characterized by its selectivity towards volatiles, carbonyls and polyaromatic hydrocarbons families.

The interest in selective filters and their existence on the market is not new, the typical example being activated carbon particles on cellulose acetate fibers being the "Dalmatian" filters known for decades. Carbon has selectivity towards carbonyls and a boosted version of this property results from a development of the firm Celanese, whose novelty results from achieving a high concentration of activated carbon encompassed in a highly porous support mass (CelFx technology). Following an agreement with Celanese, the Owner has exploited this development in the Floyd cigarette brand in its various versions. The original Celanese patent WO 2012/054111 suggests the possibility of investigating the applications of this porous mass as a support for countless possible materials and chemicals, including new forms of carbon such as graphene, nanotubes, fullerenes, etc., although in practice this has not been applied so far in any market product. This impossibility in the implementation turns current inventions into theoretical possibilities without any industrial application whatsoever Moreover, Celanese has not continued the line of research based on its porous masses.

### Field of the invention

Our invention basically involves a device capable of selectively and simultaneously reducing or eliminating the content of toxic compounds of at least four Hoffmann groups in gaseous media. It shall be hereinafter referred to as "multifilter device" (MFD).

While underlining the broad scope of application of the MFD object of our invention, we will reduce the field to the filtration of emissions of current tobacco industry products (cigarettes, RYO, HNB, etc.).

### Brief description of the invention

Our MFD includes a polymeric structure of high macroporosity support of adsorbent agents. This high porosity facilitates the circulation and contact with the agents of the gaseous material to be purified. These adsorbent agents have been selected to operate mainly on the following chemical groups of smoke compounds: a) carbonyl compounds, b) polyaromatic hydrocarbons, c) nitrosamines, and d) volatile organic compounds (VOCs). Of these groups, a), b) and d) are generated by pyrolysis, pyrosynthesis and/or incomplete combustion from precursors that are originally present in the tobacco plant, while group c) is mainly generated by biological processes during the "curing" of tobacco. The design of this multi-filter system, its selective and simultaneous operation, as well as its evident possibility of incorporating other adsorbents for other toxic groups, is considered an absolutely novel aspect of our invention.

### State of the art

### 1) CN106036999 (A), China, 08/AUG/2016, PRETTECH MACHINERY CO LTD

### Title: Compound cigarette filter tip

The invention relates to a compound cigarette filter tip which comprises a filter tip section close to the lip end, a filter tip section close to the tobacco shred end and wrapping paper. The filter tip section close to the lip end is provided with a fiber filtration layer, the filter tip section close to the tobacco shred end is provided with a metal sintered porous filtration layer, the metal sintered porous filtration layer is a micro-filtration element made from a metal powder sintered porous filtration material, the metal powder sintered porous filtration material is prepared by using metal particles as a raw material, one-time formation is achieved through a formation technology after pretreatment, and the metal powder sintered porous filtration material is formed after sintering. The filtration material is high in filtration precision, good in filtration effect, uniform in structure and good in reproducibility, so that the compound cigarette filter tip does not deform, has the very good filtration effect on nicotine, tar, nitrosamine and other non-gaseous-phase toxic and harmful substances, does not absorb beneficial aroma components in cigarettes, is high in melting point, does not cause overburning producing cancerogens, prevents scorch and toxic smoke (produced due to scorch of the filter tip), has a good cooling effect and makes cigarettes having a cool and refreshing taste.

### 2) CN106072761 (A), China, 05/AUG/2016, CHINA TOBACCO FUJIAN CO LTD,

### Title: Method to reduce the specific N nitrositamine content of tobacco in cigarette mainstream smoke

The present invention provides a kind of method to reduce the specific N nitrosamine content of tobacco in cigarette mainstream smoke. The method includes the step adding 2,6 di-t-butyl 4 methylphenol to a cigarette. The method can effectively reduce the content of the specific N nitrosamine of tobacco in cigarette mainstream smoke, without affecting the sensory quality of the cigarette.

### 3) CN205512329 (U), China, 31/AUG/2016, CHINA TOBACCO SHAANXI IND CO LTD

### Title: Reducing cigarettes' harmful substances filter section

**The utility model provides a filter element group wrapped up in the shaping paper bag to a reduce cigarette's harmful substances filter section. The filter core is divided into the three sections, both ends are ordinary silk bundle filter sections, middle silk bundle filter rod for soaking the gynostemma pentaphylla saponin. This pipe tobacco can be a polypropylene silk bundle for cigarettes, acetate filament restraints** or the **compound body** of two of **the abovementioned silk bundles for cigarettes. Cigarettes silk bundles, applied to this filter section, can effectively reduce harmful substance content such as phenol, crotonic aldehyde, benzo pyrene, and nitrosamine among the mainstream smoke. The reduction range of the harmfulness index of seven harmful components vary between 3.02% and 8.27%, which can simultaneously promote the suction quality of cigarettes and the satisfaction of sensory organs while smoking. The improvement range was summarized in a score of near 0.5~3 minutes, which can improve the filter section usability and the cigarette smoke sensory organ stability.**

### 4) CN204519347, China, 05/AUG/2015, CHINA TOBACCO FUJIAN IND LLC

### Title: Compound binary filter section of peculiar tobacco nitrosamine and reduction of cigarette mainstream smoke

The utility model discloses a compound binary filter section of peculiar tobacco nitrosamine and reduction of cigarette mainstream smoke. The compound filter section includes that interior layer of the filter core and the layer in the proper order wraps up outside, the filter core is the compound binary filter core, the compound binary filter core comprises the complex section and the acetate section of interval setting adds titanate nano wire combined with material granule. Compared with the prior art, the utility model discloses that the filter section adopts a compound binary construction, uses the acetate to separate the compound section, adding titanate nano wire combined with material granule, and effectively reduces the peculiar tobacco nitrosamine and the cigarette mainstream smoke with intersegmental acetate, if: NNK, NNN, NAT, NAB, the range reaches more than 25%, and then reaches the purpose of reducing cigarette harmfulness, keeping the original taste of cigarettes and absorbs its quality. The outer core layer of the two-layer filter makes the utility model disclose a firmer structure of the compound binary filter.

### 5) CN104525095, China, 11/DEC/2014,

### SHANGHAI TOBACCO GROUP CO LTD; BEIJING CIGARETTE FACTORY SHANGHAI TOBACCO GROUP CO LTD

**Title:** Magnesium-aluminum bimetal hydroxide nanosheet material for selectively reducing nitrosamine in cigarette smoke as preparation method and application of magnesium-aluminum bimetal hydroxide nanosheet material

The invention relates to a preparation method of a magnesium-aluminum bimetal hydroxide nanosheet material for selectively adsorbing special nitrosamine in cigarette smoke. The preparation method comprises the following steps: respectively preparing a mixed aqueous solution of a magnesium salt and an aluminum salt and a mixed aqueous solution of sodium hydroxide and sodium carbonate; then, stirring and mixing the two solutions to obtain a mixed system with the pH value of 9-10 and then transferring the mixed solution to a reaction kettle for coprecipitation-hydrothermal reaction treatment; and after reaction, cooling, centrifugalizing and washing the aqueous solution of sodium hydroxide and sodium carbonate; then stirring and mixing both solutions to obtain a mixed system with the pH value of 9-10 and then transferring the mixed solution to a reaction kettle for coprecipitation-hydrothermal reaction treatment; and afeter the reaction, cooling, centrifugalizing and washing to neutral, and then drying to obtain the magnesium-aluminum bimetal hydroxide nanosheet material. The preparation method is simple to operate and good in repeatability, and the prepared magnesium-aluminum bimetal hydroxide nanosheet material is selectively combined with special nitrosamine in cigarette smoke, is little in additive amount, can be used for efficiently decreasing harms and has very good popularization and application values.

**6)** CN203913370, China, 11/MAR/201, CHINA TOBACCO FUJIAN IND LLC,

### Title: Double cell compound filter cylinder capable of reducing nitrosamine in mainstream smoke

The utility model discloses a kind of double cell compound filter cylinder capable of reducing nitrosamine in the mainstream smoke, and the filter stick comprises a filter core and a wrapping layer of the filter core. The filter core is a double cell compound filter core, and the double cell compound filter core consists of spaced acetate fiber sections and anatase titanium dioxide microsphere particle material segments. The anatase titanium dioxide microsphere particle material segments are formed by dry particles of anatase titanium dioxide microspheres spread across a set of cellulose acetate fibre. The filter section provided by the utility model uses the double cell compound structure, wherein the anatase titanium dioxide microsphere particles materials and the cellulose acetate fiber material are spaced, thus selectivity reducing tobacco-specific nitrosamine in the cigarette's mainstream smoke, reaching more than 20%, and thus reducing the harmfulness of tobacco. Moreover, the filter section can keep the original taste of cigarettes and its sucking quality.

### 7) CN203723432, China, 28/FEB/2014, CHINA TOBACCO FUJIAN IND LLC

### Title: Porous cigarette filter

The utility model relates to a porous cigarette filter comprising a filter element and a covering layer covering the peripheral outer surface of the filter element. The filter element comprises at least one fiber material segment and at least one nitrosamine filter segment made of nitrosamine filter material. In the length-wise direction of the filter, one end of the nitrosamine filter segment is connected with one end of the fiber material segment. In the length-wise direction of the filter, the center of the fiber material segment or the nitrosamine filter segment on one side of a smoke outlet is provided with pores. The porous cigarette filter has the advantages that tobacco specific nitrosamine in main stream smoke of cigarettes can be selectively decreased by more than 20%, the cigarettes are less dangerous accordingly, and the original taste and smoking quality of the cigarettes can be retained.

### 8) WO2013185464, China, 11/MAR/2013, CHINA TOBACCO CHUANYU IND CO

### Title: Filter tip additive for reducing nitrosamine in cigarette smoke and use thereof

Disclosed in the present invention are a filter tip additive for reducing nitrosamine in cigarette smoke and the use thereof, the additive being one of protoporphyrin derivatives. The above filter tip additive is suspended in a solvent at the rate of 0.05%-10% of the weight of a carrier, then sprayed into the carrier, the carrier with the above protoporphyrin derivatives added thereto being added into a tow filter rod upon tow forming to manufacture a composite filter tip. It is of benefit that the protoporphyrin derivatives proposed first in the present invention has a significant effect in reducing the TSNA content of the smoke.

### 9) CN103190704, China, 17/APR/2013, CHINA TOBACCO JIANGSU IND CO, equivalent CN103190704 (B)

### Title: Method for selectively reducing specific nitrosamines in cigarette smoke

The invention discloses a method for selectively reducing specific nitrosamines in cigarette smoke. The method is used for selectively reducing the specific nitrosamines in the cigarette smoke by the aid of chitosan-cyclodextrin-glutaraldehyde polymers. The chitosan-cyclodextrin-glutaraldehyde polymers are used as additives of cigarette filters, and are utilized when the cigarette filters are manufactured, so that the specific nitrosamines in the cigarette smoke are selectively reduced when a smoker smokes cigarette. The method has the advantages that releasing amounts of specific nitrosamines substances, such as NNN (N-nitroso-nornicotine), NNK [4-(N-methyl-N-nitrosamine)-1-(3-pyridyl)-butanone], NAT (N-nitroso-anatabine) and NAB (N-nitroso-anabasine) which are contained in tobacco, in the cigarette smoke can be obviously reduced; and a chitosan-cyclodextrin-glutaraldehyde polymer adding mode is simple, and the chitosan-cyclodextrin-glutaraldehyde polymers can be added during manufacture for filter sticks and are convenient to operate.

### 10) CN103027379, China, 19/JAN/2013, UNIV FUZHOU; CHINA TOBACCO FUJIAN IND LLC

### Title: Method for selectively reducing nitrosamines in mainstream smoke of cigarettes

The invention discloses a method for selectively reducing nitrosamines in mainstream smoke of cigarettes. TiO2 and aqueous alkali reacts in a polytetrafluoroethylene container after being mixed, the generated product and metal copper are washed and dried after being subjected to ion exchange so as to obtain a load-bearing titanate nanowire adding material; the load-bearing titanate nanowire adding material and an ethyecellulose ethanol solution are sufficiently mixed and stirred, the mixed solution is dried in vacuum, crushed and then is filtered by a 40-60 mesh sieve to prepare a required filter tip additive, and a binary filter tip is manufactured by a binary filter tip forming machine. Titanate nanowires are interwoven in a net shape, and the gap between every two nanowires is smaller. The structure is just like layers of filter screens capable of effectively intercepting the harmful substances from passing. In addition, as a large amount of Cu<2+> and -N-N=O of groups of nitrosamine, which have stronger interaction, exist on the surface of the titanate nanowire subjected to ion exchange, higher interaction is achieved. The cigarettes of the binary filter tip can be used for remarkably reducing special nitrosamines of four kinds of tobaccos in the mainstream smoke.

### 11) CN202603593, China, 23/APR/2012, PAN LINHUA

### Title: Novel cigarette

The utility model discloses a novel cigarette. The novel cigarette comprises a cigarette and a filter, wherein the filter is formed by two sections of spongy fibrous bodies and partial active carbon particles which are connected by a section of thin paper; the thin paper comprises a tin-foil layer; the partial active carbon particles are fixed in the middle part by the two sections of fibrous bodies of the filter. The novel cigarette disclosed by the utility model has the advantages that the ternary compound biological filter is adopted, the patent technology of the molecular sieve is utilized for absorbing carbon monoxide and nitrosamine and the like in smoke, so that harmful ingredients in the smoke are obviously reduced, and the throat part, the lung part and the internal environment of a human body are better protected.

### 12) CN102813279, China, 30/AUG/2012, CHINA TOBACCO JIANGSU IND CO

### Title: Method for efficiently reducing specific nitrosamines in cigarette smoke.

The invention discloses a method for efficiently reducing specific nitrosamines in cigarette smoke. Beta-carotene/beta-cyclodextrin inclusion compound is added during preparation of cigarette filters, homogeneous filter sticks of cigarette filters, or base materials of binary or tertiary compound filter sticks. The beta-carotene/beta-cyclodextrin inclusion compound selectively combines the specific nitrosamines in smoking. Therefore, efficient damage reduction is achieved. The method for efficiently reducing specific nitrosamines in cigarette smoke has the advantages that release amounts of specific tobacco nitrosamines in the cigarette smoke, such as NNN (N'-nitrosonornicotine), NNK (nicotine-derived nitrosamine ketone), NAT (N'-nitroso-anatabine) and NAB (N'-nitrosoanabasine), can be evidently reduced; low addition of the beta-carotene/beta-cyclodextrin inclusion compound helps improve aroma of cigarettes, and feasibility in practical production and application is high; and addition of the beta-carotene/beta-cyclodextrin inclusion compound is simple, the beta-carotene/beta-cyclodextrin inclusion compound can be added in the production of filters, operation is convenient, and practicality is high.

### 13) CN102599651, China, 13/DEC/2010, CHINA TOBACCO HEBEI IND CORP; UNIV HEBEI; BEIJING ZHONGJI HUIMIN TECHNOLOGY DEV CO LTD

### Title: Preparation method for composite cigarette filter stick capable of reducing harmful components of cigarette.

The invention discloses a preparation method for a composite cigarette filter stick capable of reducing harmful components of a cigarette. The preparation method includes the following steps: feeding ground Na+ or H+ type polypropylene particles with sieve holes into glycerol triacetate to be prepared into turbid liquid with weight percent concentration ranging from 5% to 20%; uniformly spraying the turbid liquid onto a cellulose acetate cigarette tow; rolling the cellulose acetate cigarette tow into a feeding filter stick connected with the cigarette in a rolling manner; and preparing the composite cigarette filter stick by the feeding filter stick and the rolled cellulose acetate cigarette tow according to the length proportion of 2:1 to 1:1. Harmful substances to human bodies, such as NNK (nitrosamine), benzo [a] pyrene, phenol, crotonaldehyde, HCN (hydrogen cyanide) and the like, in smoke of flue-cured cigarettes are simultaneously reduced at one step in different degrees, and 17.11% of the NNK, 11.43% of the benzo (a) pyrene, 25.79% of the crotonaldehyde, 61.80% of the phenol and 29.97% of the hydrogen cyanide can be reduced simultaneously at one step. The cigarette with the composite cigarette filter stick does not generate odor as compared with cigarette smoking quality of a cigarette connected with a common cigarette filter, and the fragrance of the cigarette is excellent.

### 14) CN102553543, China, 20/FEB/2012, FENGSHUN COUNTY YANGXIKENG ECOLOGICAL AGRICULTURE TECHNOLOGU CO LTD

### Title: Cigarette filter tip adsorbing material and preparation method thereof

The invention discloses a cigarette filter tip adsorbing material and a preparation method thereof. The adsorbing material has a porous structure and is processed by pickling shaddock skin inner layer, drying, crushing and granulating. The adsorbing material can effectively filter out tar, nitrosamine, benzopyrene and other hazardous substances generated during cigarette burning, thereby well protecting smoker health, has no off-flavor or off-odor when cigarette smoke gas passes, can also improve smoking mouthfeel and cigarette grade, has good processability and is favorable to manufacture of the cigarette filter tip adopting the material.

### RU2009125621, Russia, 26/NOV/2007, British American Tobacco, equivalents:

AR063873 (A1) AU2007329060 (A1) AU2007329060 (B2) BRPI0720149 ( A2) BRPI0720149 (B1) BRPI0720149 (B8) CA2670927 (A1) CA2670927 (C) CL2007003473 (A)
CN101547617 (A) CN101547617 (B) DK2094119 (T3) EP2094119 (A2) EP2094119 (B1) ES2573933 (T3) HUE029119 (T2) JP2010511395 (A) J P5313913 (B2) KR101426975 (B1) KR20090098861 (A) MX2009005999 ( A) MX289922 (B) PL2094119 (T3) PT2094119 (E) RU2504307 (C2) TW 200838444 (A) TWI421037 (B) UA98477 (C2) US2011041859 (A1) US20 13139835 (A1) US2014155555 (A1) US2015038648 (A1) US8733369 (B2 ) US8889795 (B2) US9169341 (B2) US9265283 (B2) WO2008068153 (A2) WO2008068153 (A3) ZA200903459 (B)

### Title: Molecular impression printed polymers selective to nitrosamine specific for tobacco and ways of application thereof

The invention refers to selective molecular printed polymers for at least one tobacco-specific nitrosamine (TSNA), the polymer being obtained using materials comprising a TSNA or a structural analogue thereof, a monomer containing a neutral functional group selected from a group comprising 2-hydroxyethyl methacrylate (HEMA), acrylamide, methacrylamide, glycerol monoacrylate and glycerol monomeacrylate, and a hydrophobic reticulating agent. The invention also describes a method to produce a molecularly printed polymer, a smoking article, a tobacco smoke filter, and a kit for the detection, quantitative determination, and separation of nitrosamines contained in a sample, including a molecularly printed polymer, a method for reducing the content of at least one TSNA in a tobacco product and a method for producing tobacco material. EFFECT: Obtaining molecularly printed polymers that are selective for compounds containing the nitrous radical.

### CN102511928, China, 04/JAN/2012, CHINA TOBACCO ANHUI IND CO LTD

### Title: Filter tip capable of reducing the releasing amount of harmful ingredients of mainstream cigarette smoke

The invention discloses a filter tip capable of reducing the releasing amount of harmful ingredients of mainstream cigarette smoke. The filter tip comprises a titanium dioxide nano tube additive, wherein the content of an additive in each filter tip is 10-30 mg; the pore diameter of a titanium dioxide nano tube is in a range of 1.5-30 nm. The titanium dioxide nano tube additive is a compound of one or more than two of the titanium dioxide nano tube, a cuprous oxide coped titanium dioxide nano tube, an iron oxide doped titanium dioxide nano tube, an aluminum doped titanium dioxide nano tube, a zirconium doped titanium dioxide nano tube and a boron doped titanium dioxide nano tube according to any ratio. With the adoption of the filter tip, the releasing amount of the harmful ingredients including hydrocyanic acid, benzopyrene, phenol, crotonaldehyde, ammonia and NNK (nitrosamine) in the mainstream smoke can be reduced by more than 30%.

### CN201888247, China, 13/DEC/2010, CHINA TOBACCO HEBEI IND CORP; UNIV HEBEI; BEIJING ZHONGJI HUIMIN TECHNOLOGY DEV CO LTD, sin traducción

### Title: Composite cigarette filter stick capable of simultaneously reducing harmful ingredients in cigarette

The utility model discloses a composite cigarette filter stick capable of simultaneously reducing harmful ingredients in cigarette, which comprises a filter element and a wrapping layer which is wrapped outside the filter element, wherein the filter element adopts cellulose acetate tows or mekralon tows, and the surface of at least 1/3-1/2 of the length of each cellulose acetate tow or each mekralon tow is coated with a mesh-like polypropylene particle layer. Micropores and apertures on the surface of a cauliflower-like functional polymer material coated on the surface of the composite cigarette filter stick, i.e., the mesh-like polypropylene particle layer form meshes with a large specific surface area, and Na<+>or H<+> is bestrewed on the surface, so that the mesh-like polypropylene particle layer has a physical and chemical adsorption performance, and nicotine-derived nitrosamine ketone (NNK), benzo [a] pyrene, phenol, croton aldehyde, hydrocyanic acid (HCN) and other harmful substances in cured tobacco cigarette smoke can be simultaneously reduced once only at different degrees. Compared with the cigarette sensory evaluation of an ordinary cigarette filter tip, no odor is generated, aftertaste is improved, the aroma of cigarette is full and mellow. Through the test, the purpose that NNK, benzo [a] pyrene, phenol, croton aldehyde and HCN in cigarette smoke can be simultaneously reduced once only at different degrees can be reached.

### 18) CN201781972, China, 13/DEC/2010, CHINA TOBACCO HEBEI IND CORP; UNIV HEBEI; BEIJING ZHONGJI HUIMIN TECHNOLOGY DEV CO LTD, no translation

### Title: Composite filter stick added with nanometer material

Same as the previous one, although with a different title.

### 19) CN201523665, China, 11/MAY/2009, JINTAO DENG, no translation

### Title: Cigarette holder with dual-filtering function

The utility model provides a cigarette holder with a dual-filtering function, which relates to the field of filtering tips. A filter in the cigarette holder comprises a hollow filtering sleeve and a filtering tube, small pores are disposed on the wall of the filtering tube, air outlet holes are arranged on the outer wall of the filtering sleeve, an annular projecting block is formed at one end of the filtering tube positioned inside the filtering sleeve, the diameter of the annular projecting block is larger than the inner diameter of a sleeve opening of the filtering sleeve and smaller than the diameter of the inner wall of the filtering sleeve, the annular projecting block is in clearance fit with the inner wall of the filtering sleeve, the filtering tube is flexibly sleeved on an inner cavity of the filtering sleeve to form pull flexible connection, a smoke passing passage is formed inside the filtering sleeve, the front end of a middle sleeve is connected with the rear end of a secondary filtering device, and the front end of the secondary filtering device is connected with a sucking tip. The cigarette holder can further filter off harmful substances in cigarette smokes, particularly filter off most of carcinogenic substances involving tar and nitrosamine, maximally reduce damage to health of a smoker caused by combusting cigarette smokes without affecting the smoker to smoke cigarettes, and can meet smoking addiction.

### 20) CN201409454, China, 11/MAY/2009, JINTAO DENG, no translation.

Same as previous one.

### 21) EA200602044 (EP1756023), Eurasian Patent Organization, 24/MAY/2005, British American Tobacco.

Equivalents:
AT553074 (T) AU2005244726 (A1) AU2005244726 (B2) BR PI0511416 (A) BRPI0511416 (B1) BRPI0511416 (B8) CA2565129 ( A1) CA2565129 (C) CN1972884 (A) CN1972884 (B) EA014824 (B1) EP1756023 (A1) EP1756023 (B1) ES2384260 (T3) JP2008500 442 (A) JP5468736 (B2) KR101276988 (B1) KR101505333 (B1) K R101556872 (B1) KR20070033356 (A) KR20130036360 (A) KR201 40108600 (A) MXPA06013628 (A) PL1756023 (T3) UA88469 (C2) US2007186940 (A1) US2014332015 (A1) US8807142 (B2) US9844 230 (B2) WO2005112670 (A1) WO2005112670 (A8) ZA200609378 (B)

### Title: Nitrosamines selective molecular imprinted polymer, method for the manufacturing thereof (variants), kit, smoking article and a filter comprising polymer and methods of use of the polymer

Molecularly imprinted polymer derived from at least one functional polymer comprising an acidic, selective functional group for at least one specific tobacco nitrosamine compound, in which the polymer has a molecularly specific imprinted matrix for tobacco nitrosamine or a functional or structural analogue thereof. It also describes variants of a method for making such a polymer, and a kit, a smoking article and a smoke filter, which comprise a polymer, and methods for using the polymer.

### 22) CN101433818, China, 04/DEC/2008, Univ. Nanjing, no translation or equivalents

### Title: Novel mesoporous material for absorbing granule phase substance, coke tar, phenol and amine nitrite in mainstream flue gas of tobacco

The invention discloses a novel mesoporous material for adsorbing tar, phenol and special nitrosamine in tobacco and so on, in mainstream smoke of the tobacco. The mesoporous material with high adsorption property is used as an addition material for filter tips of cigarettes; and the mesoporous material is a mesoporous molecular sieve with a three-dimensional mesh microstructure and monolithic appearance such as SBA-15,or is a SBA-15 mesoporous molecular sieve material which is plated with a liquid film or is modified by metal oxides such as zirconia and is provided with the three-dimensional mesh microstructure and the monolithic appearance. The invention adopts a more convenient and effective method to develop the SBA-15 mesoporous molecular sieve material with the three-dimensional mesh microstructure and the monolithic appearance and modify the surface/a surface layer, has good performance of intercepting environmental toxins such as interception particulate phase matters and phenol in smoke, has the characteristics of saving energy, saving time, and reducing environmental pollution during the preparation, can also reduce cost, and has remarkable economic benefit and social benefit.

### 23) CN101019692, China, 22/MAR/2007, He Jinxing

### Title: Filter rod and filter tip with mixed active carbon fiber

The filter rod and the filter tip are made of cellulose acetate with homogeneously mixed active carbon fiber in the amount of 1-10 wt% of the cellulose acetate. Adding the active carbon fiber with nanometer holes can raise the adsorption performance of the filter rod and the filter tip greatly and reduce the volatile harmful matters, such as nitrosamine, benzopyrene, CO, tar, etc in the main smoke flow greatly while producing no obvious increased sucking resistance. Besides, the filter rod and the filter tip with mixed active carbon fiber possesses some anti-fake function.

**24)** CN101053446, China, 01/MAR/2007, Univ. Nanjing, no translation.

### Title: Mesoporous novel materials for absorbing nitrosamine in main flow flue gas in tobacco

The present invention discloses a novel mesoporous material used for adsorbing nitrosamine in tobacco main stream flue gas, wherein high adsorption capability mesoporous material is used as additions material of cigarette filter tip, and the mesoporous material is made by spreading high viscosity and difficult volatile liquid film compounds on inside and outside surface of mesoporous molecular screen, or the mesoporous material is mesoporous molecular screen containing template agent micelle. The present invention implement surface/surface layer modification for mesoporous molecular screen material with more simple and effective method, increases emphatically the capability for absorbing amine nitrite in smoke, and it has the features of energy saving, time saving, environment pollution reducing and cost reducing. Therefore it has obvious economic benefit and social benefit.

### 25) CN1879511, China, 13/JUN/2005, HEFEI INST PHYSICAL SCI CAS

### Title: Tip addictive material for decreasing tobacco specified nitrosamine in cigarette smoke and method for preparing same

The invention discloses a spout stick addictive for reducing nitrite amine peculiar in smoke gas, and the method for preparing the same. The addictive comprises granular molecular screen with granular size being 150-500 micrometer, and noble metal or its oxide compound evenly distributed on said molecular screen with granular size being 1-50 nm, and rare-earth metal or its oxide compound. The method comprises following steps: (1) preparing granular molecular screen with size being 150-500 micrometer; (2) putting molecular screen into rare earth metal solution for 8-24 hours, washing and drying under 50-80 Deg. C for 3-6 hours, treating under 120-200 Deg. C for 2-5 hours; (3) putting molecular screen into noble metal solution for 8-24 hours, drying at 50-80 Deg. C for 3-6 hours, treating at 120-200 Deg. C for 2-5 hours, treating at 230-300 Deg. C for 3-6 hours, and getting said spout stick addictive.

### 26) CN1582797, China, 05/JUN/2004, WUHU CIGARETTE FACTORY

### Title: Detoxifying additive for filtering tips

A detoxicating additive for the tip filter of cigaretter in order to decrease the contents of tar, Co and nitrosamine in cigarette's smoke is prepared from tea leaf, haw, phyllanthus, embolica and myrobalan through extracting their active components in the form of liquid, concentrating and drying to obtain particles.

**27)** CN1582796, China, 15/JUN/2004, Univ. Nanjing, no translation. Equiv: CN1268240 (C)

### Title: Filtering tip and filement additive for reducing nitrosamine in smoke of cigarettes

A tip filter of cigarette for decreasing the content of nitrosamine in cigarette's smoke features that it contains the tow additive in the form of liquid, which, contains polyglucoside compound, organic acid, inorganic acid, assistant and water.

### 28) CN1375245, China, 15/JUN/2004, Univ. Nanjing, no translation. Equiv: CN1167364(C)

### Title: Cigarette combustion-supporting and harm-reducing additive with nano pores

A cigarette additive to reduce the nitrosamine content in cigarette smoke and to help the combustion of the cigarette is a kind of atom with multihole such as zeolize KA suspended in colloid solution, especially good to use micron 3A zeolize of multihole material with grain diameter of 2-5 um and hole diameter of about 0.3 nanometer, containing potassium ions. The invented additives can be sprayed on the cigarette scraps at the quantity of 0.5-10% of cigarettes scraps weight and dried them in the air for producing cigarettes. The combustion time of cigarette in passive burning and inhaling burning can be shortened by 5-12% and 20-26%, separately and subsequently to reduce the nitrosamine content in smoke by 23-33% and 43-63% so as to greatly reduce the environmental pollution caused by smoking.

**29)** WO2014059101 **(UY35074)** (Celanese Acetate, year 2014). This patent has been abandoned in Europe, presumably because antecedent WO2012051548 (Celanese Acetate, 2012) has been found, which is practically the same. Either of the two: the abandoned one or its inhibitory antecedent could be considered **the closest prior art.**

### Title: Apparatuses, systems, and associated methods for forming porous masses for smoke filters

The invention may involve feeding via pneumatic dense phase feeding a matrix material into a mold cavity to form a desired cross-sectional shape, the matrix material comprising a binder particle and an active particle; heating at least a portion of the matrix material so as to bind the matrix material at a plurality of contact points thereby forming a porous mass length; cooling the porous mass length; and cutting the porous mass length radially thereby producing a porous mass. In some instances, the matrix material may include a plurality of active particles, a plurality of binder particles (optionally having a hydrophilic surface modification), and optionally a microwave enhancement additive.

However, while the present application and WO2014059101 produce very similar external filters, '101 is based on a method with emphasis on the mechanical in terms of the physical assembly of the filter. something purely structural -and so claims,- while the present application is based on the production of the composite from the chemical and physical-chemical point of view, **and on its performance.** When the functionality is considered in these aspects, there are great differences in scope and range of applicability compared to the patent filter '101: with a much more sophisticated composite it reaches a sanitary level that produces noticeable reductions of toxic compounds of several Hoffmann groups. This is achieved by introducing adsorbent agents that involve molecular interactions of varied nature into the composite. These agents demanded an extensive previous investigation of their efficiency in this medium (that of tobacco smoke), forcing also to define granulometry and adequate relative proportions to prevent incompatibilities that lead to the structural disintegration of the porous mass that constitutes the composite.

### Conclusion on the state of the art

The international background search has been based -not exclusively- on the IPC **A24D** classification : FILTERS; MOUTHPIECES FOR CIGARS OR CIGARETTES; MANUFACTURE OF TOBACCO SMOKE FILTERS OR MOUTHPIECES

As documented above, none of the background found is inhibitory to patent the new filter object of this invention.

### Brief Description of the Figures

Figure 1 illustrates the degree of filtration in comparison with internationally standardized cigarettes.
Figure 2 shows sintered GUR. SEM image (Scanning Electron Microscopy).
Figure 3 shows sintered GUR including the adsorbent materials. SEM image.
Figure 4 depicts the hexagonal structure of graphene and derived allotropic forms.
Figure 5 shows the trigonal sp² hybridization.
Figure 6 illustrates the bonding between aromatic molecules according to the Hunter and Sanders mechanism (J. Am. Chem. Soc. 1980, 112, 5525-3534).
Figure 7 shows the structures and dimensions of NNN and NNK.
Figure 8 depicts the generation of NNK during Burley tobacco curing.
Figure 9 shows molecular sieves types A and X.
Figure 10 illustrates different alternatives for retaining NNN according to the pore diameter of the zeolite.
Figure 11a shows the fibrous texture of SBA-15.
Figure 11b shows the internal texture of the DMF mass.
Figure 12 shows an example of equipment for producing DMFs continuously.
Figure 13 illustrates the application of the DMF to a traditional combustible cigarette.
Figure 14 illustrates the application of the DMF to an HNB vape device and the mouthpiece detail.
Figure 15 shows carbonyl levels in µg per smoking unit ("stick" or cigarette).

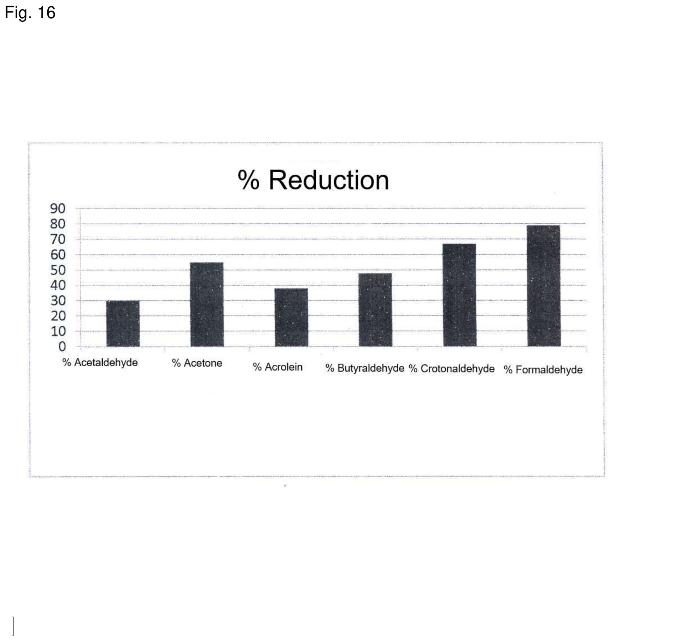

Figure 16 shows the percentage reduction of carbonyls present in the aerosol of the "stick" before and after applying the DMF.

### Detailed description of the invention

### Support or "binder".

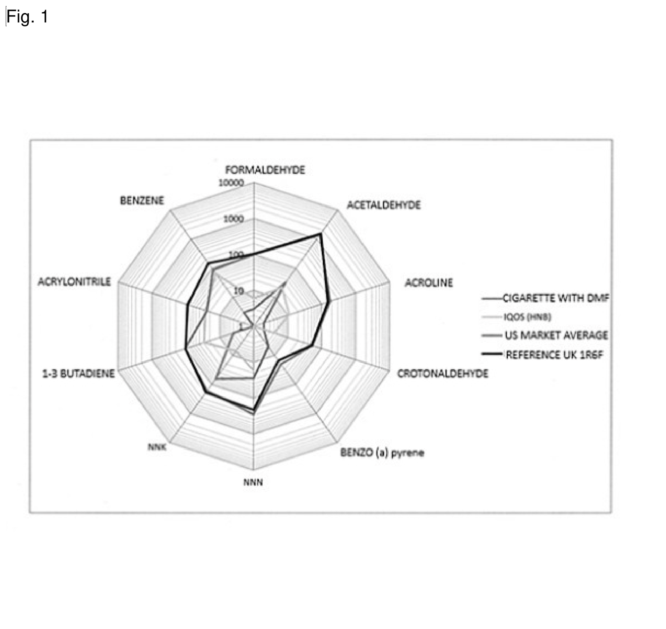

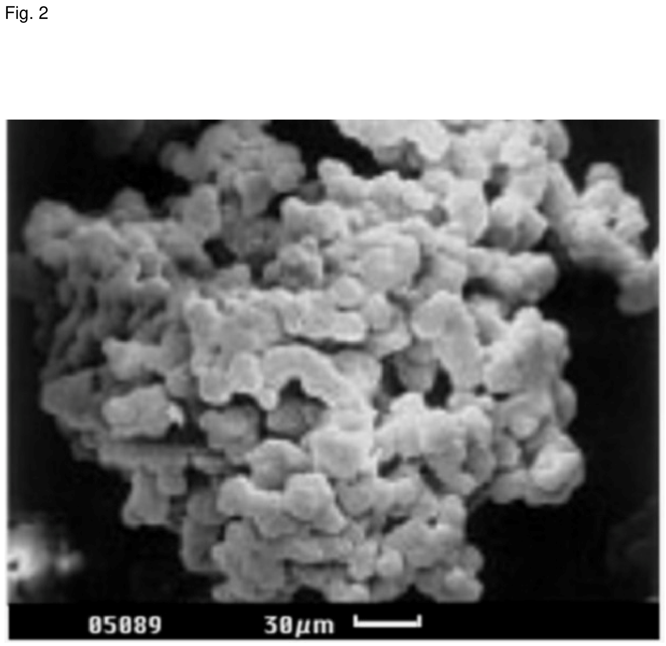

The structural support or "binder" of the MFD of the invention herein is a high molecular weight polyethylene, for example, between 300,000 g/mol and approximately 2,000,000 g/mol, with average particle sizes between 300 and 1500 microns and apparent densities between 0.25 g/ml and 0.50 g/ml. This material, registered under the brand GUR by Ticona GmbH, undergoes sintering: at high temperatures, but below the melting point, its particles coalesce without flowing. At the points of contact between particles an atomic diffusion occurs, leaving the particles chemically bonded generating the porous structure represented in Fig. 1. In this porous structure, the particles of adsorbent materials included in the porous mass are bonded as shown in Fig. 2. In this case, bonds with GUR may be chemical or simply mechanical according to the chemical nature of the adsorbent particle contacted. In order to optimize the operational efficiency of GUR, its extreme hydrophobicity must be overcome. In fact, the particles of the adsorbents used in the porous mass are usually hydrophilic in nature, which hinders the interaction between the GUR particles and those of adsorbents. The solution is achieved through the hydrophilic functionalization of the surface of GUR using oxygenated functions (carboxyl, hydroxyl, epoxy, etc.). This transformation will generate Van der Waals-like interactions, hydrogen bridges, electrostatic interactions, etc., thus reducing the tendency to the disintegration of the porous mass. To achieve this transformation the most appropriate technology is the treatment of GUR by plasma. Note that this treatment only modifies the surface of the treated object without affecting its other properties, although it can surely improve the tribological properties (friction, wear) of the porous masses when they are subjected to slides, for example, in continuous production processes. Note that this highly porous structure of the GUR allows to obtain loads of absorbent agents that cannot be achieved on other supports.

### Adsorbents

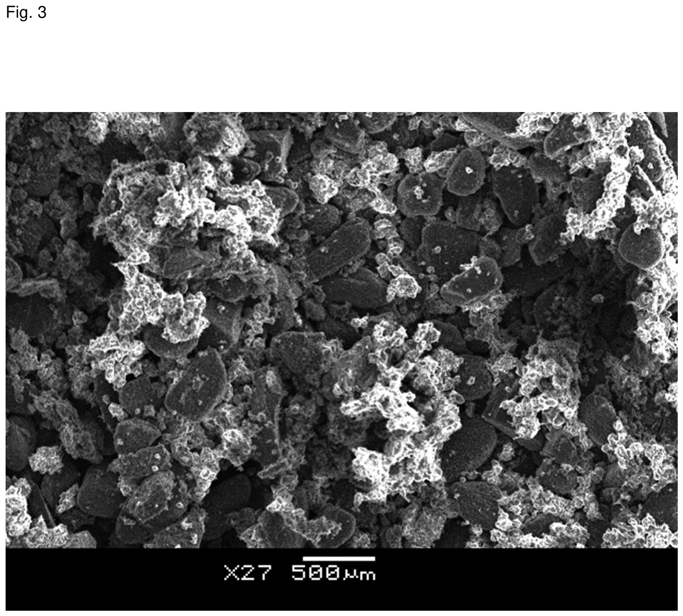

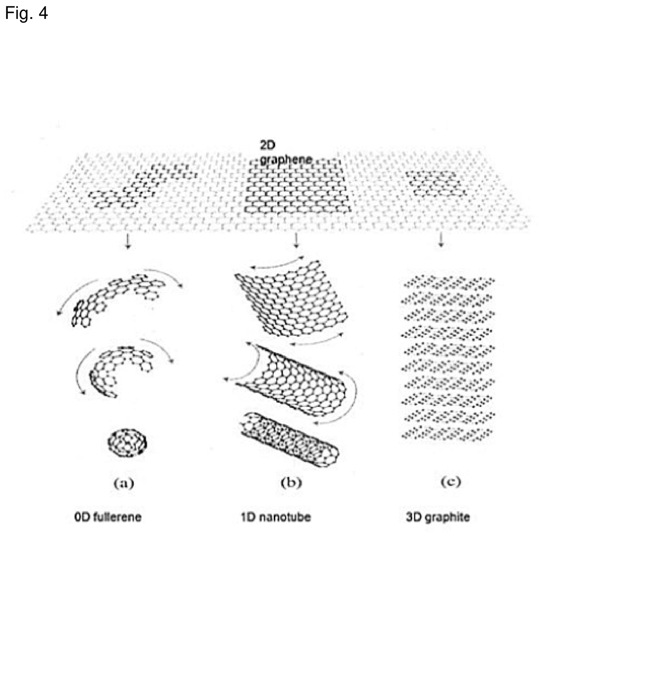

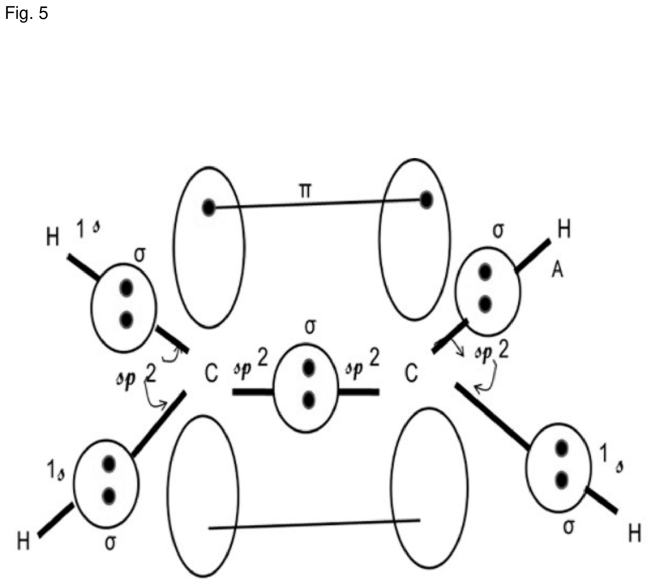

1. Activated carbon. It is one of the oldest and most traditional adsorbents. Its textural characteristics provide great versatility of applications. These include its carbonyls retention capacity, which when combined with the high porosity resulting from the sintering of GUR and the resulting high load levels, it has allowed us to achieve reductions of more than 80% of carbonyls in tobacco smoke. These reduction levels are not available with other systems based on activated carbon on other classic supports, such as cellulose acetate. We highlight this feature as another novel aspect of our invention: high loading capacity of adsorbents that, thanks to the support's high porosity, does not significantly affect the system's pressure drop when applied to smoking systems. Desirable values for some activated carbon specifications in our porous mass are:
   Total ash content: 4 % - 6 %
   Apparent density: 460 g/l - 540 g/|
   BET area: 1000 m2/g = 1200 m2/g
   pH: 9.0 -- 11.0
   Material of origin: coconut shell activated with steam
   Granule: 30 US mesh x 70 US mesh.
2. Graphene. It belongs to the new generation of carbonaceous adsorbents being the unit block of other allotropic forms such as nanotubes, fullerenes, nanofibers, nanocones, etc. These new forms have relatively large surface areas, operate at nanoscale and exhibit new chemical and electronic properties that generate countless new applications. Graphene is presented as a two-dimensional monolayer of carbon atoms with hybridization sp² arranged in a hexagonal structure (Fig. 3). Fig.4 details electronically a trigonal hybridization sp² between two carbon atoms. The two remaining π electrons form a π bond, providing additional stability to the sigma bond (σ) between the carbon atoms. If we now generalize this mechanism to graphene hexagons we can visualize this as a plane of sigma junctions (σ) accompanied by a cloud of conjugated π electrons. These π electrons contribute to provide special mechanical, electrical and chemical properties to graphene. Thus, for example, such π electrons can generate bonds with other molecules with aromatic rings similar to those of graphene (e.g. polyaromatic hydrocarbons) through mechanisms such as that proposed by Hunter and Sanders [1] outlined in Fig. 5 and which assigns special importance to the σ-π (sigma-pi) attractions. These overcome with their greatest strength the π-π (pi-pi) repulsions, thus stabilizing the system: this is the mechanism our porous mass is based upon to retain polyaromatic hydrocarbons through the action of graphene. The graphene used in the porous mass of our invention is graphene obtained by exfoliation of graphite. As is known, it is formed by the superposition of an enormous number of layers of graphene that are held together by weak Van der Waals forces, which facilitates exfoliation. The final form in which we introduce it into the mixture for the porous mass is nanoparticles of approximately 15 microns in diameter, with graphene thickness of 5 to 15 Nm and surface area of 120 to 150 m²/g.
3. Zeolites and other molecular sieves. Among the most toxic components of tobacco smoke are nitrosamines: chemical compounds characterized by having in its molecule the N-nitrous group (N-NO). Within this family, there are volatile and non-volatile nitrosamines, the latter include the tobacco-specific nitrosamines (TSNA) which are four:
   N'-nitrosonornicotine (NNN)
   4-methylnitrosamine-1-(3-pyridyl)-1- butanone (NNK)
   N'-nitrosoanatabine (NAT), and
   N'-nitrosoanabasine (NAB).

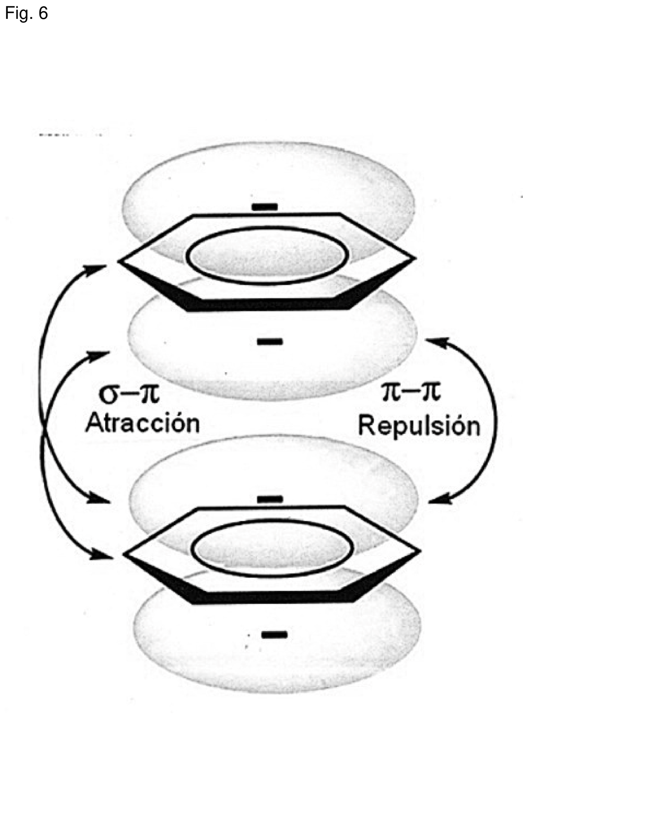

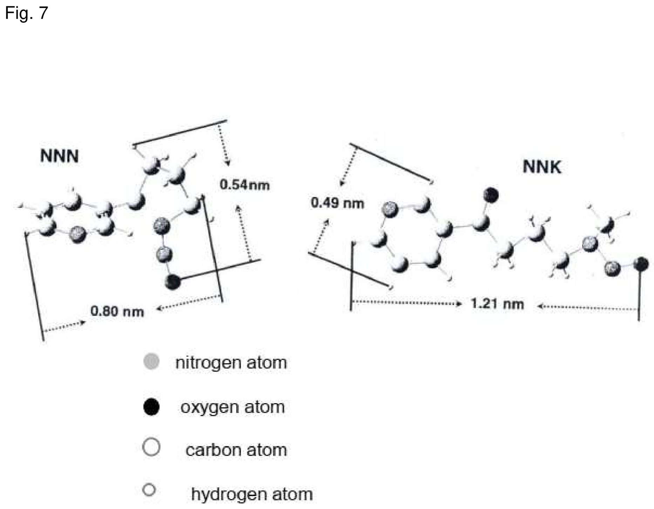

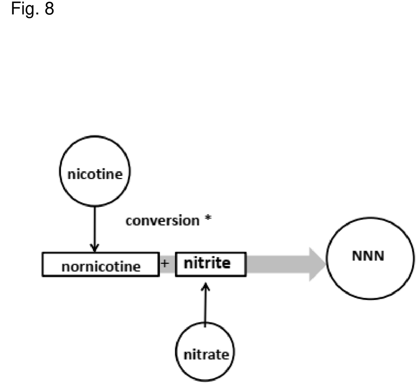

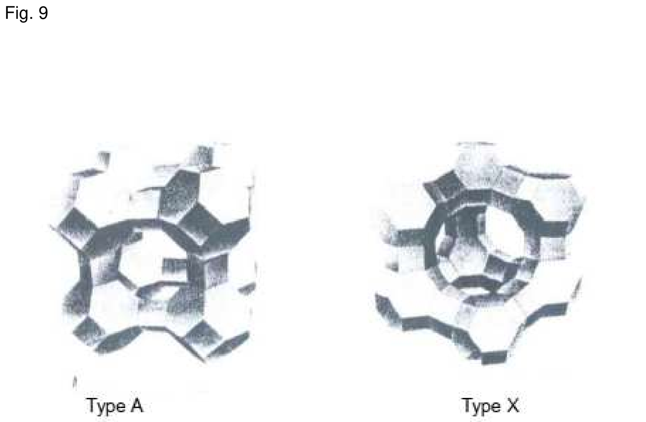

The most important are NNN and NNK, whose structures and dimensions are represented in Fig. 6. TSNA are mainly generated as outlined in Fig. 7 during curing in burley tobacco sheds. Zeolites are usually used to eliminate or reduce the nitrosamines content in smoke. These constitute a class of aluminosilicates characterized by having ordered microporous structures (pores <2 nm). The corresponding crystallographic structure is formed by tetrahedrons of (Al0₄) and (SiO). These tetrahedrons constitute the basic building blocks for various zeolithic structures, of which type A and type X represented in Fig. 8 are the most commercially used. Adsorption and degradation of nitrosamines by zeolites are two efficient strategies to eliminate environmental carcinogens that result from the special selectivity of zeolites. The two determining factors governing selective adsorption of nitrosamines are the electrostatic field within the channel and pore size. The first leads the nitrosamine molecule by inserting it totally or partially, for example, through the NO polar group, while the second conditions the geometry that allows the carcinogen to be retained. It should be noted that each tetrahedron [ALO₄]⁻ results in a negative charge to the structure which is compensated by a cation (H⁺, Na + ,^{K +},etc.). An efficient way to improve zeolite performance is to introduce a metal into its structure. In the case of our porous mass, the metal is the copper that is exchanged with the hydrogen or sodium of the original zeolite, which contributes to promoting the attraction to the NO. To this "cupric zeolite" we will assign the formula Cu-ZSM-5 following a notation widely used in heterogeneous catalysis systems as the one we are referring to. It should be noted that, while the zeolites of our MFD can develop an efficient activity on volatile nitrosamines, they have difficulty retaining those of the TSNA group for several reasons: a) because their pores, of diameters smaller than 2 nm (micropores) are of smaller dimensions than the molecules of the TSNA group, although they can retain them by fixation of the group NOT by forces of an electrostatic nature (Fig. 9) in the zeolite channel, and b) because an important fraction of nitrosamines pass to the smoke joined by weak dispersion forces to its particulate phase. To complement the activity of Cu-ZSM-5, a mesoporous compound can be included in the DMF, such as SBA-15 or MCM-41, which extends the system's porosity range and adsorption capacity as follows:

| | Pore diameter Nm | Pore volume ml/g | BET Area m²/g |
|---|---|---|---|
| SBA - 15 | 6 - 11 | 1.46 | 550 |
| MCM - 41 | 3.4 | > 0.75 | > 800 |
| CuZSM -5 | 0.55 -1 | > 0.1 | 300 - 400 |

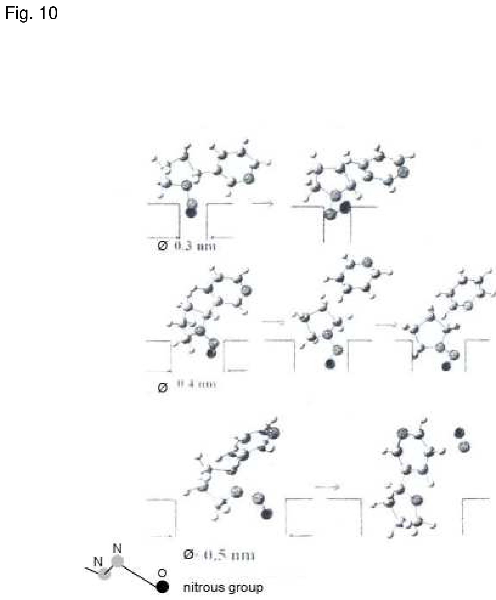

From these two macroporous silicates (pore >2nm) we have selected SBA-15 to incorporate into the porous mass for two reasons: its greater pore diameter and volume, and its fibrous nature (Fig. 10a). This last feature will help to retain, in the passage of smoke stream through the chaotic texture of the porous mass (Fig. 10b), smoke particles that can carry nitrosamine molecules attached and whose diameter is distributed between 100 nm and 1000 nm.

### MFD composition and preparation

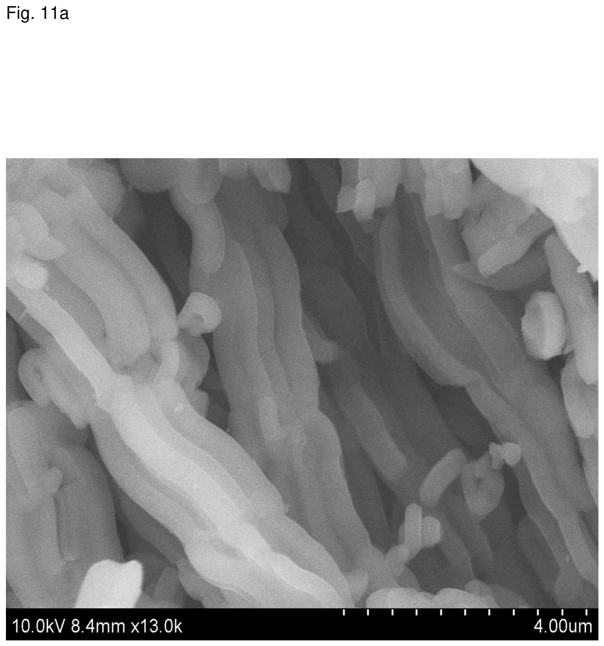

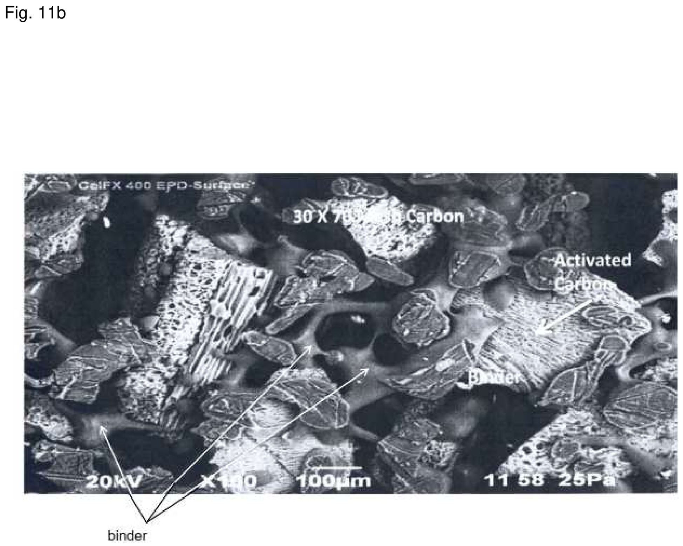

A highly efficient MFD can be prepared by including an adsorbent complex within the following composition ranges: activated carbon (55% - 65%), GUR (25% - 35%), graphene (3% - 1%), CuZSM-5 (3% - 6%), SBA-15 (3% - 6%). These components are mixed sequentially with each other through a procedure that ensures a mixture as perfect as possible. Mainly to overcome heterogeneities derived from differences in densities between the mixed materials, we suggest the use of a Turbula-type mixer. With the mixture thus obtained, the system that will mold it according to its application is loaded. Considering its preferred application to the tobacco industry, one of its most common geometries will be cylindrical, for its adaptation as a nozzle for combustible cigarettes. In such a case, the mold will be a cylindrical steel tube and a non-limiting scheme of the equipment to form the MFD is represented in Fig. 11. The tube is heated to 200 °C for 20 minutes for sintering the GUR. By regulating the speed of passage of the mixture through the heated tube and the length of the tube, a continuous production system can be achieved, in which case an adjustable length cutter can be located at the end of the tube.

### Examples of MPM applications in the tobacco industry

### Application to traditional combustible-type cigarettes

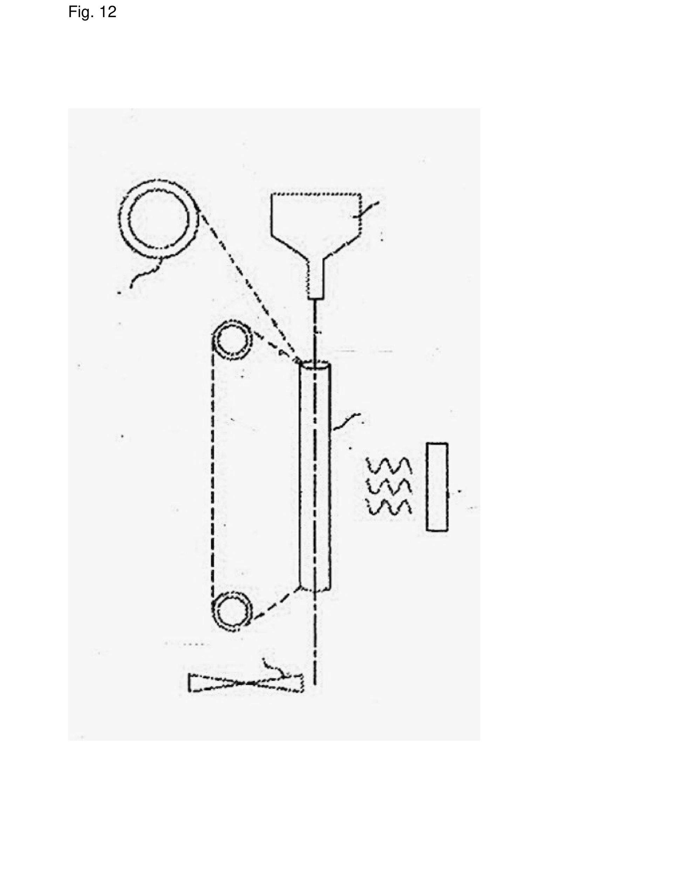

To incorporate the MFD into a conventional combustible cigarette, a design such as Fig.12 can be used where the MFD is connected at one end to the tobacco column and at the other end to a sector usually made up of cellulose acetate fibers thus constituting a additional not selective filter and unnecessary for regular MFD operation. However, it fulfills an aesthetic purpose by hiding the black color and rough touch section of the MFD. It also serves a service function if, through circular perforations lines on its surface, the aim is to introduce ventilation in the cigarette or, if inside, the aim is to introduce aromatic capsules. Cigarette smoking can be done by the Health Canada Intensive regimen using a Cerulean SM450 or similar smoking machine, and simultaneously runs in another channel of the same machine the smoking of a reference cigarette, for example the 1R6F of the University of Kentucky. Extracts are analyzed by official analytical methods C0RESTA or Health Canada. The difference in contents between the two cigarettes for each component analyzed allows us to know the reduction experienced against the concentration in the reference cigarette, which is a typical compositional representative of combustible cigarettes internationally. TABLE I shows the order of magnitude of toxic compound reductions achieved with MFD in cigarettes that respond to the scheme in Fig. 12 with tobacco blends characteristic of the "American blend", which is the most popular type for combustible cigarettes internationally.

### Application to new generation cigarettes that heat but do not burn (HNB)

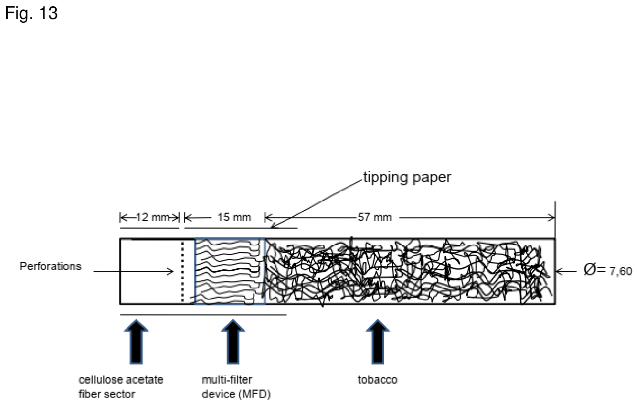

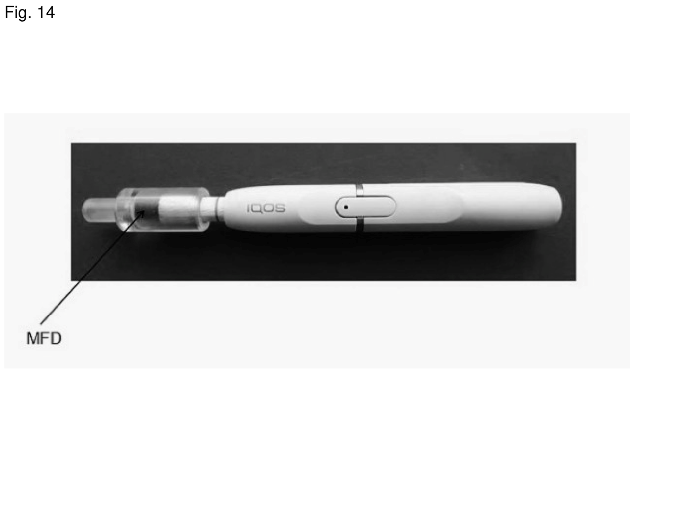

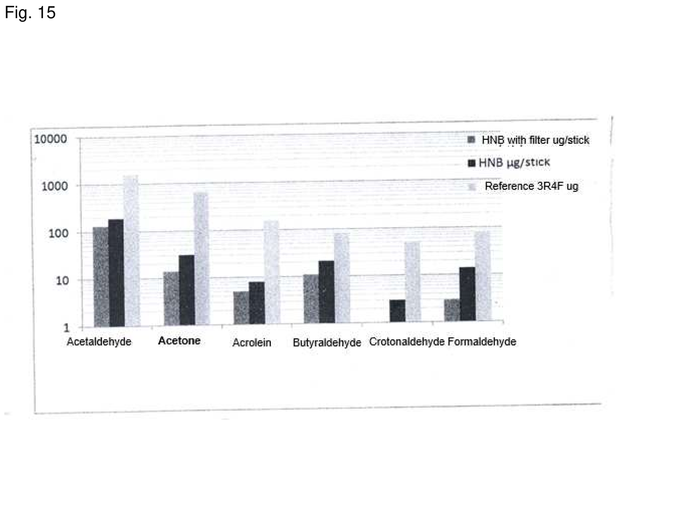

In these cigarettes or "sticks", the combustion is replaced by heating of the tobacco to maximum temperatures of 350 °C, thus the emitted aerosol is reduced by approx. 80% to more than 90% the content of many toxic compounds generated by the combustion process. However, in this aerosol there is a remnant of such compounds, particularly those such as carbonyls, the precursors of which begin to pyrolyze at temperatures above 200 °C. Among these carbonyls, there are some highly irritating or carcinogenic (e.g. acetaldehyde, formaldehyde, butanaldehyde, etc.). The aforementioned remnant can be further reduced by an application of the MFD such as the one shown in Fig. 13, but not limited to it, adapted to the "stick" of one of the HNB smoking equipment of greater international expansion. The chart in Fig. 14, in logarithmic scale and units of ug/"stick", compares the levels of carbonyls in the "stick" without and with the MFD, as well as in the standard reference cigarette, in this case the 3R4F. The % reduction of remaining carbonyls achieved by the MFD is shown in Fig. 15.

The following table (Table 1) shows the surprising degree of reduction of Hoffmann compounds by the present invention, an unprecedented reduction.

### CHART I

### Reduction % in cigarette smoke of different Hoffman compounds achieved with the application of a multi-filter device (MFD)

Reference cigarette: 1 R6F of the University of Kentucky
Smoking method: Health Canada Intensive
Smoking machine: Cerulean 450

| Carbonyls | Reduction % |
|---|---|
| Formaldehyde | 88 |
| Acetaldehyde | 92 |
| Acetone | 94 |
| Acroline | 95 |
| Propionaldehyde | 89 |
| Crotonaldehyde | 91 |
| Methyl-ethyl-cetone | 91 |
| Butanaldhyde | 93 |

| Polyaromatic hydrocarbons | |
|---|---|
| Naphtalene | 70 |
| Acenaphthylene | 87 |
| Acenaphtene | 80 |
| Fluorene | 58 |
| Anthracene | 68 |
| Phenanthrene | 69 |
| Fluoransene | 67 |
| Pyrene | 69 |
| Chrysene | 10 |
| Benzo(a)anthracene | 79 |
| Benzo(a)pyrene | 63 |

| Nitrosamines | |
|---|---|
| NNNa | 88 |
| NABb | 58 |
| NATc | 76 |
| NAKd | 70 |

| VOCSe | |
|---|---|
| 1-3 Butadiene | 95 |
| Isoprene | 98 |
| Acrylonitrile | 97 |
| Bencene | 97 |
| Toluene | 84 |

| | |
|---|---|
| a- N'nitrosanornicotine b- N'nitrosoanabasine c- N'nitrosoanatabine d- 4 methylnitrosamine-1-(3-pyridyl(1-butanone)) e- Volatile Organic Compounds | |

Figure 1 shows more clearly, and on a logarithmic scale, the degree of filtration in comparison with internationally standardized cigarettes.

## Claims

1. A multi-adsorbent filter device capable of selectively and simultaneously reducing or removing the content of toxic compounds belonging to at least four groups of Hoffmann compounds in gaseous media, consisting of a macroporous polymeric structure filter section and a cellulose acetate section, characterized because the macroporous polymeric structure filter section is polyethylene of very high molecular weight acting as a support and binder of the adsorbent agents, being in the following proportions:
a) GUR binder 25% - 35%
b) activated carbon 55 - 65%
c) graphene 3 - 10%
d) cupric zeolite 3 - 10%
e) SBA15 3 - 6%
and where the adsorbents are specially selected and quantified to selectively retain at least one component of each of the following Hoffmann chemical groups: carbonyls and volatile organic compounds, polyaromatic hydrocarbons and nitrosamines from smoke or tobacco product aerosol.

2. A method for preparing the section of the macroporous polymeric structure filter **characterized by** intimately mixing the components specified in claim 1 and in such proportions, heating the mixture to 180 °C - 250 °C for 25 - 35 minutes in a metal mold of suitable geometry for the application to be carried out, preferably a hollow cylinder, being the mixture extruded through the heated metal cylinder with a retention time of about 25 to 35 minutes for sintering, then segmenting the extruded material into the necessary dimensions to be integrated into the cigarette between the tobacco column and the acetate filter portion, which will preferably go to the consumer's side.
